# EUROPÄISCHE PATENTSCHRIFT

(11) **EP 4 204 762 B1**
(45) Veröffentlichungstag und Bekanntmachung des Hinweises auf die Patenterteilung: **01.10.2025**
(21) Anmeldenummer: 21769938.8
(22) Anmeldetag: 26.08.2021
(51) Int. Cl.: G01B 11/275

(54) **MESSTAFEL ZUR FAHRZEUGVERMESSUNG**
MEASURING PANEL FOR VEHICLE MEASUREMENT
PANNEAU DE MESURE POUR MESURE DE VÉHICULE

(30) Priorität: 28.08.2020 DE 102020122565
(43) Veröffentlichungstag der Anmeldung: 05.07.2023
(73) Patentinhaber: Beissbarth Automotive Testing Solutions GmbH, 82205 Gilching (DE)
(72) Erfinder: PETERS, Stefanie, 80993 München (DE); GRAF, Simone, 80993 München (DE); KRÜGER, Christof, 80993 München (DE)
(74) Vertreter: Schmitt-Nilson Schraud Waibel Wohlfrom Patentanwälte Partnerschaft mbB
(86) Internationale Anmeldenummer: PCT/EP2021/073606
(87) Internationale Veröffentlichungsnummer: WO 2022/043436

(56) Entgegenhaltungen:
- CN-B- 106 289 116
- DE-A1- 102013 211 210
- US-A- 6 134 792

## Beschreibung

Die vorliegende Erfindung betrifft eine Messtafel für die optische Vermessung und/ oder Kalibrierung einer Fahrzeugkomponente, insbesondere eines Fahrwerks, eines Kraftfahrzeugs. Die Erfindung betrifft auch Vorrichtung und ein Verfahren zur optischen Vermessung und/oder Kalibrierung einer Fahrzeugkomponente unter Verwendung einer erfindungsgemäß ausgebildeten Messtafel.

Zur optischen Vermessung und/oder Kalibrierung einer Fahrzeugkomponente, insbesondere eines Fahrwerks, eines Kraftfahrzeugs kommen regelmäßig Messköpfe zum Einsatz, die Bilder von an den Rädern des Kraftfahrzeugs angebrachten Messtafeln aufnehmen. Auf den Messtafeln befinden sich optische Merkmale, die z.B. ein Messmarkenmuster bilden. So können beispielsweise relevante Parameter des Fahrwerks des vermessenen Kraftfahrzeugs bestimmt werden, z.B. Sturz-, Spur- oder Felgenschlagwerte. Derartige Messtafeln können auch verwendet werden, um eine Komponente eines Fahrerassistenzsystems, beispielsweise einen Sensor / eine Kamera, eines Fahrerassistenzsystems zu kalibrieren.

Aus US 6 134 792 A, CN 106 289 116 A und DE 10 2013 211 210 A1 sind Messtafeln bekannt, die dazu vorgesehen sind, an den Rädern eines Kraftfahrzeugs angebracht zu werden.

Ein optisches Merkmal ist ein Merkmal in einem Markenmuster, das optisch erfasst werden kann und dessen Parameter algorithmisch bestimmt werden können. Bei den optischen Merkmalen kann es sich zum Beispiel um signifikante Punkte, wie Zentren, Ecken oder Schnittpunkte von geometrischen Objekten, aber auch um grauwert- oder musterabhängige Texturmerkmale handeln. Ein Messmarkenmuster kann zum Beispiel separate, sich berührende, schneidende, geordnete oder ungeordnete Elemente oder auch eine oder mehrere komplexe Strukturen beinhalten, deren für die Vermessung signifikante Parameter nicht ohne weiteres von einem Menschen erfasst werden können.

Um die optische Vermessung und/oder Kalibrierung einer Fahrzeugkomponente mit Messköpfen vornehmen zu können, welche die Messtafeln nur mit einer Kamera beobachten, müssen Parameter der auf den Messtafeln ausgebildeten optischen Messmarkenmuster, welche die Anordnung der optischen Merkmale innerhalb der Messmarkenmuster beschreiben, mit hoher Genauigkeit bekannt sein und bei der Auswertung der aufgenommenen Bilder berücksichtigt werden.

Es ist daher eine Aufgabe der vorliegenden Erfindung, Messtafeln für die optische Vermessung und/oder Kalibrierung einer Fahrzeugkomponente anzugeben, die es ermöglichen, die Parameter der auf den Messtafeln ausgebildeten optischen Messmarkenmuster den Messköpfen auf einfache und zuverlässige Weise bekannt zu machen.

Diese Aufgabe wird durch den Gegenstand des unabhängigen Patentanspruchs 1 gelöst. Vorteilhafte Weiterbildungen ergeben sich aus den abhängigen Ansprüchen.

Eine erfindungsgemäße Messtafel für die optische Vermessung und/oder Kalibrierung einer Fahrzeugkomponente, insbesondere für die Vermessung eines Fahrwerks eines Kraftfahrzeugs, umfasst wenigstens ein optisches Merkmal und wenigstens einen optisch erfassbaren Informationsträger von Messtafelinformationen, welche die Messtafel selbst betreffen. Das wenigstens eine optische Merkmal ist auf einer Vorderseite der Messtafel ausgebildet oder angebracht, und der wenigstens eine optisch erfassbare Informationsträger ist auf einer Rückseite der Messtafel ausgebildet oder angebracht.

Auf der Vorderseite der Messtafel ist zusätzlich wenigstens ein Identifikationsmuster ausgebildet, das es ermöglicht, die Messtafel mit Hilfe einer auf die Vorderseite der Messtafel gerichteten Bildaufnahmevorrichtung zu identifizieren. Die Messtafel umfasst ein erstes Messtafelelement und ein separat von dem ersten Messtafelelement ausgebildetes zweites Messtafelelement. Das wenigstens eine optische Merkmal und der wenigstens eine optisch erfassbare Informationsträger sind auf dem ersten Messtafelelement ausgebildet und das Identifikationsmuster ist auf dem zweiten Messtafelelement ausgebildet.

Durch optisches Erfassen, Einlesen und Auswerten des optisch erfassbaren Informationsträgers können die Messtafelinformationen, die beispielsweise Parameter des auf der jeweiligen Messtafeln ausgebildeten Messmarkenmusters enthalten, den Messköpfen einfach und zuverlässig bekannt gemacht werden. Insbesondere können Übertragungsfehler, wie sie bei einer manuellen Übertragung der Messtafelinformationen an die Messköpfe auftreten können, zuverlässig vermieden werden.

Dadurch, dass der wenigstens eine optisch erfassbare Informationsträger auf der Rückseite der Messtafel ausgebildet oder angebracht ist, ist der optisch erfassbare Informationsträger unabhängig von dem wenigstens einem optischen Merkmal, insbesondere von dem Messmarkenmuster, das eine oder mehrere optische Merkmale umfasst und das auf einer Vorderseite der Messtafel ausgebildet ist. Die optischen Merkmale bzw. das optische Messmarkenmuster werden daher nicht durch den optisch erfassbaren Informationsträger beeinträchtigt, und die Fläche der Messtafel muss nicht vergrößert werden, um den optisch erfassbaren Informationsträger zusätzlich zu dem Messmarkenmuster auf der Messtafel unterzubringen, ohne die optischen Merkmale bzw. das Messmarkenmuster zu beeinträchtigen.

Das optische Identifikationsmuster ermöglicht es die Messtafel mit Hilfe einer in einem Messkopf vorhandene Bildaufnahmevorrichtung eindeutig zu identifizieren, wenn die Messtafel in einer Messposition, d.h. in einer Orientierung, in der die Vorderseite der Messtafel dem Messkopf zugewandt ist, an einem Fahrzeugrad montiert ist.

Der wenigstens eine optisch erfassbare Informationsträger kann eine beliebige Auswahl und/oder Kombination der im Folgenden aufgezählten Messtafelinformationen enthalten.

Eine erste Messtafelinformation kann eine Produktkennung ("Type") definieren. Über die Produktkennung kann bei Verwendung unterschiedlicher Messtafeln für verschiedene Messaufgaben der Messablauf durch das Anbringen der jeweils benötigten Messtafel automatisch gesteuert werden. Zum Beispiel kann durch das Wechseln der Messtafeln in einer laufenden Fahrzeugvermessung automatisch in ein Programm für die Justierung eines Fahrerassistenzsystems geschaltet werden. Aber auch ohne eine automatische Ablaufsteuerung kann über die Produktkennung die Verwendung der richtigen Messtafeln für die Messaufgabe überprüft und somit eine Fehlbedienung vermieden werden.

Die Produktkennung ermöglicht es der Fahrwerksvermessungsanlage zudem, für ein und dieselbe Messaufgabe unterschiedliche Messtafeln zu verwenden. Dies ist besonders dann vorteilhaft, wenn im Rahmen der Produktweiterentwicklung die Messtafeln technisch geändert werden und eine Anpassung der Parameter für die Vermessung notwendig ist. Im Rahmen von Software-Updates kann die Fahrwerksvermessungsanlage kontinuierlich um Produktkennungen neuer Messtafeln und deren zugehörigen Parametern erweitert werden.

Gibt es mehr als eine Messtafel mit unterschiedlichen Messmarkenmustern, kann die optische Bestimmung der optischen Merkmale mit Hilfe einer Produktkennung vereinfacht werden.

Eine zweite Messtafelinformation kann eine individuelle Kennung, beispielsweise eine Seriennummer enthalten. Eine individuelle Kennung auf der Messtafel kann der Software eine automatische Zuordnung von gespeicherten Parametern zu der Messtafel ermöglichen. Die Parameter der Messtafel können beispielsweise von einem Server heruntergeladen werden, auf dem die Parameter mehrerer Messtafeln gespeichert sind. Wenn keine Zuordnung hergestellt werden kann, kann vorgesehen sein, eine Fehlermeldung zu generieren, um eine Fehlmessung zu verhindern.

Somit können auch in Monokamerasystemen kostengünstige, vermessene Messtafeln sicher eingesetzt werden. Fehlerhafte Messungen, die durch fehlende oder falsch zugeordnete Parameter der Messtafeln verursacht werden, können durch eine automatische Zuordnung der Parameter zu den zugehörigen Messtafeln verhindert werden.

Darüber hinaus können die Messtafeln automatisch mittels Software, wie beispielsweise einer Online-Diagnose oder integrierten Servicetools, auf deren Eignung hin überprüft werden. Dadurch kann der Hersteller die Messtafeln eindeutig rückverfolgen und gegebenenfalls im Rahmen einer Rückrufaktion oder eines Serviceaustauschs gezielt zurückrufen.

Eine individuelle Kennung der Messtafeln ist auch zur Plausibilitätsprüfung und/ oder zur Ablaufsteuerung während der sogenannten "Umschlagmessung" bei der Genauigkeitsüberprüfung der Anlage geeignet.

Eine dritte Messtafelinformation kann eine geometrische Information über die Messtafel und/oder ein auf der Messtafel ausgebildetes optisches Messmarkenmuster enthalten. Geometrische Informationen zur Messtafel selbst oder zu Details der Messtafel (Referenzobjekte), wie zum Beispiel der Abstand zwischen Referenzpunkten oder Abweichungen von einem vorgegebenen Referenz-Messmarkenmuster, können als Parameter oder Hilfsparameter in die Fahrwerksvermessung einbezogen werden und so die Messgenauigkeit steigern. Die Messtafelinformation kann insbesondere auch den Bezug der optischen Merkmale bzw. des Messmarkenmusters zu einer Anbringungsvorrichtung, die dazu ausgebildet ist, die Messtafel an einem Kraftfahrzeug anzubringen, beispielsweise einem Radadapter, beinhalten.

Eine vierte Messtafelinformation kann optische Eigenschaften der Messtafel und/ oder der Marken definieren. In Kenntnis optischer Eigenschaften der Messtafel und der Marken können im Verfahrensablauf eines Vermessungsverfahrens Beleuchtungs- und Belichtungsregelung durch Auswahl geeigneter Startparameter und der Optimierung des Iterationsverfahrens beschleunigt werden. Zusätzliche Informationen wie z.B. die optischen Eigenschaften einer auf dem Muster angebrachten optionalen transparenten Schutzscheibe/-schicht, z.B. deren Dicke und/ oder der Brechungsindex zur Bestimmung der optischen Brechung des Lichts, können verwendet werden, um die Messgenauigkeit zu erhöhen.

Weiter kann der Vermessungsablauf bei der Fahrwerksvermessung, wie z.B. der Lenkwinkel und der Abrollwinkel, an das optische Verhalten der Reflexionsmarken (z.B. Reflexionsgrad, Reflexionswinkel usw.) angepasst werden und damit eine optimierte und insgesamt schnellere Vermessung erreicht werden. Dies ist dann besonders vorteilhaft, wenn sich optische Eigenschaften der optischen Merkmale und/oder Messtafeln im Rahmen der Produktweiterentwicklung ändern.

In einer Ausführungsform sind die Messtafelinformationen in dem wenigstens einen optisch erfassbaren Informationsträger codiert. In einer solchen Ausführungsform sind alle Messtafelinformationen in bzw. an der Messtafel selbst vorhanden und es müssen keine weiteren Quellen vorhanden sein und ausgelesen werden, um die gewünschten Messtafelinformationen zu erhalten. Hierdurch wird die Handhabung der Messtafeln vereinfacht, und mögliche Fehlerquellen, die sich aus einer fehlerhaften Zuordnung der in dem optisch erfassbaren Informationsträger codierten Informationen zu einer Quelle ergeben können, können zuverlässig ausgeschlossen werden.

Um alle benötigten Informationen in einen kompakten optisch erfassbaren Informationsträger codieren zu können, können die Messtafelinformationen in einer komprimierter Form in den wenigstens einen optisch erfassbaren Informationsträger codiert werden.

In einer Ausführungsform sind die Messtafelinformationen in einer maschinenlesbaren Form in den wenigstens einen optisch erfassbaren Informationsträger codiert, so dass die Messtafelinformationen einfach, bequem und mit einer geringen Fehlerwahrscheinlichkeit aus dem optisch erfassbaren Informationsträger ausgelesen werden können.

In einer Ausführungsform enthält die maschinenlesbare Form wenigstens ein Element aus der Gruppe, die umfasst: alphanumerische Symbole oder dergleichen, einen eindimensionalen Code, insbesondere einen Strichcode, oder einen zweidimensionalen Code, insbesondere einen QR-Code; oder eine Kombination daraus.

Alphanumerische Symbole können auch von einem Menschen optisch erfasst und bei Bedarf über eine Eingabevorrichtung manuell an die Messköpfe übertragen werden. Ein eindimensionaler Code, beispielsweise ein Strichcode, ist besonders einfach maschinell lesbar und auswertbar. In einem zweidimensionalen Code, insbesondere in einem QR-Code, kann auf einer kleinen Fläche eine große Menge an Daten codiert werden.

In einer Ausführungsform umfasst das Identifikationsmuster mehrere geometrische Identifikationselemente, zum Beispiel Kreise oder Polygone, insbesondere Rechtecke und/oder Quadrate. In einer Ausführungsform umfasst das Identifikationsmuster mehrere gleichartige geometrische Identifikationselemente. Derartige Identifikationselemente können besonders einfach und kostengünstig hergestellt werden.

In einer Ausführungsform sind die Identifikationselemente in einer messtafelspezifischen Anzahl auf der Messtafel ausgebildet und/oder in einer messtafelspezifischen Anordnung auf der Messtafel angeordnet, so dass die Messtafel anhand der messtafelspezifischen Anzahl und/oder der messtafelspezifischen Anordnung der Identifikationselemente eindeutig identifizierbar ist. Auf diese Weise kann die Messtafel mit großer Zuverlässigkeit maschinell identifiziert werden.

In einer Ausführungsform beinhaltet eine Messtafel einen oder mehrere optisch sichtbare Bereiche, die für die Identifikation verwendet werden können. Durch nachträgliche individuelle Aufhebung der optischen Sichtbarkeit, wie beispielsweise Abdeckung, physikalische oder chemische Zerstörung einzelner Bereiche, kann die verbleibende sichtbare Anordnung von Identifikationselementen eine eindeutige Identifikation der Messtafel ermöglichen.

In einer Ausführungsform sind die Identifikationselemente in einer vertikal, horizontal oder diagonal bzw. schräg ausgerichteten Reihe auf der Messtafel angeordnet. Die Identifikationselemente können dabei über, unter oder neben dem wenigstens einen optischen Merkmal auf der Messtafel angeordnet sein. Die Identifikationselemente können insbesondere auf einer von dem Kraftfahrzeug abgewandten Seite (Außenseite) des wenigstens einen optischen Merkmals angeordnet sein, wenn die Messtafel in einer zur Fahrwerksvermessung geeigneten Position an dem Rad des zu vermessenden Fahrzeugs montiert ist.

In einer Ausführungsform sind die Identifikationsmerkmale in das Markenmuster integriert. Sind auf unterschiedlichen Messtafeln verschiedene Markenmuster ausgebildet, erlauben diese eine direkte Identifikation der Messtafel und können daher als Identifikationselemente verwendet werden.

In einer Ausführungsform sind die Messtafelelemente plattenförmig, d.h. im Wesentlichen 2-dimensional, ausgebildet. Mit anderen Worten, die Breite und die Höhe der Messtafelelemente sind erheblich größer als ihre Dicke, so dass die Messtafelelemente als 2-dimensionale Messtafelelemente betrachtet werden können.

In einer Ausführungsform weist die Messtafel einen Messtafelelementträger auf, der dazu ausgebildet ist, das erste und das zweite Messtafelelement aufzunehmen. Dabei sind das erste und das zweite Messtafelelement insbesondere unabhängig voneinander an dem Messtafelelementträger anbringbar und von diesem lösbar.

Auf diese Weise können verschiedene Messmarkenmuster mit verschiedenen Identifikationsmustern in einem Messtafelelementträger zu einer Messtafel kombiniert werden. Insbesondere können die ersten Messtafelelemente, auf denen die optischen Merkmale bzw. Messmarkenmuster ausgebildet sind, bei Bedarf einfach ausgetauscht werden.

In einer Ausführungsform kann die optische Sichtbarkeit einzelner Identifikationselemente oder -bereiche temporär, beispielsweise durch Abdecken, oder permanent, z.B. durch physikalische oder chemische Zerstörung, eingeschränkt werden, um ein eindeutiges Identifikationsmuster zu schaffen.

In einer Ausführungsform ist der Messtafelelementträger mit Hilfe einer Anbringvorrichtung, insbesondere mit Hilfe eines Radadapters, an einem Fahrzeugrad anbringbar.

Die Erfindung umfasst auch eine Anbringvorrichtung, insbesondere einen Radadapter, mit einer erfindungsgemäßen Messtafel, wobei die Anbringvorrichtung dazu ausgebildet ist, an einem Rad eines Kraftfahrzeugs angebracht zu werden, um die Messtafel in Bezug auf das Rad des Kraftfahrzeugs zu positionieren.

Die Erfindung umfasst auch eine Vorrichtung zur optischen Vermessung und/oder Kalibrierung einer Fahrzeugkomponente, insbesondere eines Fahrwerks oder eines Fahrerassistenzsystems, mit wenigstens einer Bildaufnahmevorrichtung, wenigstens einer Bildverarbeitungseinheit und wenigstens einer erfindungsgemäß ausgebildeten Messtafel. Die wenigstens eine Messtafel ist, insbesondere unter Verwendung eines Radadapters, an einem Fahrzeugrad anbringbar, und die wenigstens eine Bildaufnahmevorrichtung ist dazu konfiguriert, ein Bild des optisch erfassbaren Informationsträgers der wenigstens einen Messtafel aufzunehmen und das aufgenommene Bild an die wenigstens eine Bildverarbeitungseinheit zu übertragen. Die wenigstens eine Bildverarbeitungseinheit ist dazu ausgebildet, die Messtafelinformationen durch Bildverarbeitung aus dem aufgenommenen Bild des optisch erfassbaren Informationsträgers zu decodieren und die decodierten Messtafelinformationen bei einer folgenden Vermessung und/oder Kalibrierung zu verwenden.

In einer Ausführungsform umfasst die Vorrichtung zur optischen Vermessung und/ oder Kalibrierung einer Fahrzeugkomponente wenigstens einen Messkopf, in dem wenigstens eine Bildverarbeitungseinheit und wenigstens eine Bildaufnahmevorrichtung ausgebildet sind.

In einer Ausführungsform umfasst jeder Messkopf zwei Bildaufnahmevorrichtungen, eine Bildaufnahmevorrichtung, die zur Aufnahme eines Bildes einer an einem Vorderrad eines Kraftfahrzeugs angebrachten Messtafel vorgesehen ist, und eine Bildaufnahmevorrichtung, die zur Aufnahme eines Bildes einer an einem Hinterrad eines Kraftfahrzeugs angebrachten Messtafel vorgesehen ist.

In einer Ausführungsform umfasst die Vorrichtung zur optischen Vermessung und/ oder Kalibrierung einer Fahrzeugkomponente insbesondere zwei Messköpfe, die dazu vorgesehen sind, auf jeweils einer Seite des Fahrzeugs angeordnet zu werden.

In einer Ausführungsform umfassen die beiden Messköpfe jeweils ein Referenzsystem. Die Referenzsysteme sind dazu ausgebildet, die Position und Ausrichtung der Messköpfe zueinander zu bestimmen, so dass die Bildaufnahmen der beiden Messköpfen in ein gemeinsames Koordinatensystem gebracht werden können.

In einer Ausführungsform umfasst die Vorrichtung zur optischen Vermessung und/ oder Kalibrierung einer Fahrzeugkomponente eine separat von den Messköpfen ausgebildete mobile Bildaufnahmevorrichtung, die zum Aufnehmen eines Bildes des optisch erfassbaren Informationsträgers ausgebildet ist.

Mit einer mobilen Bildaufnahmevorrichtung, die separat von den Messköpfen ausgebildet ist, kann der optisch erfassbare Informationsträger bequem erfasst werden, um der Vorrichtung, insbesondere einem Messkopf der Vorrichtung, die in dem optisch erfassbaren Informationsträger enthaltenen Messtafelinformationen bekannt zu machen. Bei der mobilen Bildaufnahmevorrichtung kann es sich insbesondere um eine Bildaufnahmevorrichtung (Kamera) einer mobilen Eingabevorrichtung, beispielsweise eines Smartphones oder eines Tablet-PCs, handeln.

Die Erfindung umfasst auch ein Verfahren zur optischen Vermessung oder Kalibrierung einer Fahrzeugkomponente, insbesondere eines Fahrwerks oder Fahrerassistenzsystems, unter Verwendung wenigstens einer erfindungsgemäßen Messtafel, wobei das Verfahren die Schritte aufweist: Anbringen der wenigstens einen Messtafel an einem Fahrzeugrad oder an ein für die Kalibrierung eines Fahrerassistenzsystems benötigten Messmittels; Aufnehmen eines Bildes des wenigstens einen optisch erfassbaren Informationsträgers; Erkennen und Decodieren der in dem Bild des wenigstens einen optisch erfassbaren Informationsträgers enthaltenen Messtafelinformationen; Aufnehmen wenigstens eines Bildes des wenigstens einen optischen Merkmals; und Verwenden der Messtafelinformationen bei der Vermessung oder Kalibrierung der Fahrzeugkomponente mit Hilfe des wenigstens einen aufgenommenen Bildes des wenigstens einen optischen Merkmals.

In einer Ausführungsform umfasst das Verfahren, das wenigstens eine Bild des wenigstens einen optischen Merkmals mit einer stationären Bildaufnahmevorrichtung einer Vorrichtung zur optischen Vermessung und/oder Kalibrierung einer Fahrzeugkomponente aufzunehmen. Bei der stationären Bildaufnahmevorrichtung kann es sich insbesondere um eine 2D-Kamera eines Messkopfes handeln.

In einer Ausführungsform umfasst das Verfahren, auch das Bild des wenigstens einen optisch erfassbaren Informationsträgers mit der stationären Bildaufnahmevorrichtung aufzunehmen. Dazu umfasst das Verfahren, die Messtafel umzudrehen und die Messtafel so vor dem Messkopf anzuordnen, dass der auf der Rückseite der Messtafel ausgebildete optisch erfassbare Informationsträger dem Messkopf zugewandt ist und von einer stationären Bildaufnahmevorrichtung, die in dem Messkopf ausgebildet ist, erfasst werden kann. Auf diese Weise können die Kosten gesenkt werden, da auf eine zusätzliche Bildaufnahmevorrichtung zum Erfassen des optisch erfassbaren Informationsträgers verzichtet werden kann.

In einer Ausführungsform umfasst das Verfahren, das Bild des wenigstens einen optisch erfassbaren Informationsträgers mit einer mobilen Bildaufnahmevorrichtung, die sich außerhalb der Messköpfe befindet, aufzunehmen. Auf diese Weise kann der wenigstens eine optisch erfassbare Informationsträger auf der Rückseite der Messtafel bequem erfasst werden, bevor die Messtafel an einem der Räder des Kraftfahrzeugs montiert wird oder nachdem die Messtafel an einem der Räder des Kraftfahrzeugs montiert worden ist, ohne dass es notwendig ist, die Messtafel so vor einem der Messköpfe anzuordnen, dass die Rückseite der Messtafel einem Messkopf zugewandt ist.

In einer Ausführungsform umfasst das Verfahren, die in dem optisch erfassbaren Informationsträger enthaltenen Messtafelinformationen einem Identifikationsmuster zuzuordnen; ein Bild des Identifikationsmusters aufzunehmen; die wenigstens eine Messtafel mit Hilfe des aufgenommenen Bildes des Identifikationsmusters zu identifizieren; und die in dem optisch erfassbaren Informationsträger enthaltenen Messtafelinformationen der mit Hilfe des Identifikationsmusters identifizierten Messtafel zuzuordnen.

Nachdem die in dem optisch erfassbaren Informationsträger enthaltenen Messtafelinformationen einem Identifikationsmuster zugeordnet worden sind, reicht es aus, das von einer Bildaufnahmevorrichtung eines Messkopfes optisch gut erfassbare Identifikationsmuster einer Messtafel zu erfassen, um auf die Messtafelinformationen der jeweiligen Messtafel zugreifen zu können. Messtafeln, deren Messtafelinformationen auf die beschriebene Weise einem Identifikationsmuster zugeordnet worden sind, können in einer beliebigen Permutation an den Rädern des Kraftfahrzeugs montiert werden, d.h. jede Messtafel kann beliebig an jedem Rad des Kraftfahrzeugs montiert werden, da die jeweiligen Messtafelinformationen anhand des von einer Bildaufnahmevorrichtung eines Messkopfes optisch erfassbaren Identifikationstargets abgerufen und eindeutig der jeweiligen Messtafel zugeordnet werden können.

Auf diese Weise kann das Durchführen der Fahrwerksvermessung weiter vereinfacht werden; und die Fehleranfälligkeit kann deutlich reduziert werden, da Fehler, die sich aus einer fehlerhaften Zuordnung der Messtafeln zu den Rädern des Kraftfahrzeugs ergeben können, zuverlässig vermieden werden.

Im Folgenden wird ein Ausführungsbeispiel der Erfindung unter Bezugnahme auf die beiliegenden Figuren näher erläutert.
Fig. 1 zeigt eine perspektivische Ansicht eines auf einer Hebebühne stehenden Kraftfahrzeugs mit an den Rädern des Kraftfahrzeugs angebrachten Messtafeln und einem seitlich neben den Fahrschienen angebrachten Messkopf.
Fig. 2 zeigt eine vergrößerte Ansicht einer mit Hilfe eines Radadapters an einem Rad eines Kraftfahrzeugs angebrachten erfindungsgemäßen Messtafel von vorne.
Fig. 3 zeigt eine vergrößerte Ansicht der mit Hilfe eines Radadapters an einem Rad eines Kraftfahrzeugs angebrachten erfindungsgemäßen Messtafel von hinten.
Fig. 4 zeigt eine vergrößerte Ansicht der erfindungsgemäßen Messtafel von vorne.
Fig. 5 zeigt eine vergrößerte Ansicht der erfindungsgemäßen Messtafel von hinten.

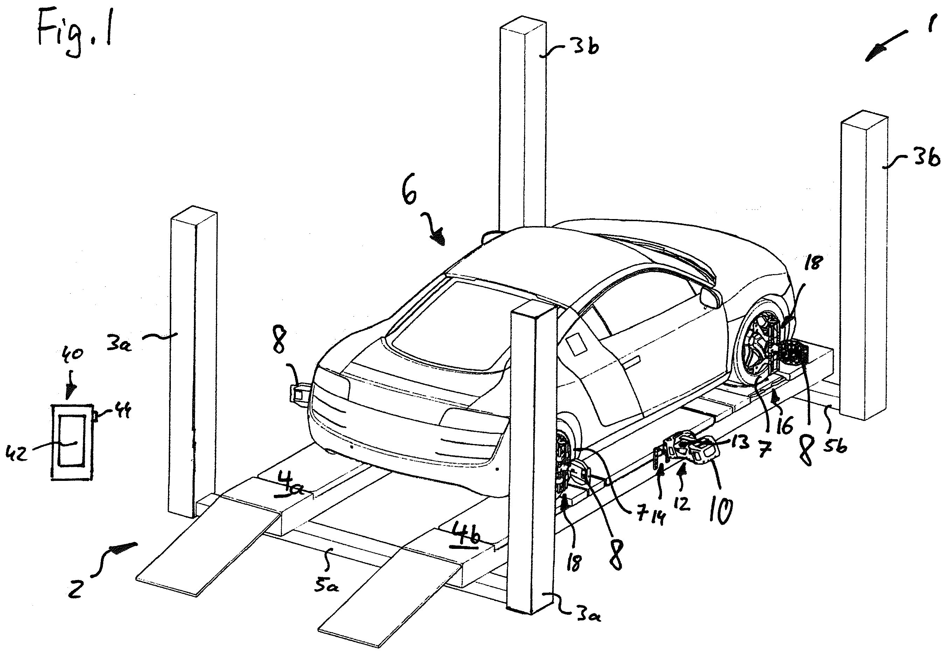

Figur 1 zeigt eine perspektivische Ansicht eines mit einer Hebebühne 2 ausgestatteten Messplatzes 1 mit einem darauf stehenden Kraftfahrzeug 6.

Die Hebebühne 2 verfügt über vier Säulen 3a, 3b, nämlich zwei hintere Säulen 3a und zwei vordere Säulen 3b, einen hinteren Querträger 5a und einen vorderen Querträger 5b, die sich jeweils zwischen den beiden vorderen und den beiden hinteren Säulen 3a, 3b erstrecken. Eine linke und rechte Fahrschiene 4a, 4b liegen auf den Querträgern 5a, 5b auf. Durch Anheben der Querträger 5a, 5b können die Fahrschienen 4a, 4b sowie das darauf stehende Kraftfahrzeug 6 angehoben werden.

An den vier Rädern 7 des Kraftfahrzeugs 6 ist mit Hilfe eines Radadapters 18 jeweils eine erfindungsgemäß ausgebildete Messtafel 8 angebracht. In der perspektivischen Darstellung der Figur 1 sind nur zwei Räder 7 des Kraftfahrzeugs 6, nämlich die beiden Räder 7 auf der rechten Seite des Kraftfahrzeugs 6, und drei der vier Messtafeln 8 sichtbar.

Die Vorderräder 7 des Kraftfahrzeugs 6 sind auf Drehplatten 16 positioniert, die Lenkeinschläge der Vorderräder 7 ermöglichen.

Auf der rechten (äußeren) Seite der rechten Fahrschiene 4b (und ebenso auf der äußeren linken Seite der linken Fahrschiene 4a, was jedoch durch das Kraftfahrzeug 6 verdeckt ist) ist jeweils ein Messkopf 10 angebracht.

Die Messköpfe 10 sind mittels geeigneter Anbringmittel 14 an den beiden Fahrschienen 4a, 4b der Hebebühne 2 befestigt. Die Messköpfe 10 können beispielsweise durch Aufschieben auf eine jeweils nach außen gerichtete Haltevorrichtung 14, die an der jeweiligen Fahrschiene 4a, 4b angebracht ist, an den Fahrschienen 4a, 4b befestigt sein.

Der Messkopf 10 ist in einer bezogen auf die Längsrichtung der Fahrschiene 4a, 4b und des Fahrzeugs 6 etwa mittigen Position angebracht, sodass eine vordere (nicht sichtbare) Bildaufnahmevorrichtung des Messkopfs 10 eine Bildaufnahme der jeweiligen Messtafel 8 an dem Vorderrad 7 und eine nach hinten gerichtete Bildaufnahmevorrichtung 12 des Messkopfs 10 eine Bildaufnahme der jeweiligen Messtafel 8 an dem Hinterrad 7 des Kraftfahrzeugs 6 tätigen kann. Die Bildaufnahmevorrichtungen 12 der Messköpfe 10 können insbesondere als kostengünstige 2D-Kameras ausgebildet sein.

Der Messkopf 10 umfasst auch eine Bildverarbeitungseinheit 13, die zur Verarbeitung und Auswertung der von den Bildaufnahmevorrichtungen 12 aufgenommenen Bilder ausgebildet ist.

An den dem Kraftfahrzeug 6 zugewandten Innenseiten der beiden Messköpfe 10, also an der zu dem jeweils gegenüberliegenden Messkopf 10 hin ausgerichteten Seite jedes Messkopfs 10, ist ein Referenzsystem vorgesehen, das eine Querkamera und ein optisch wahrnehmbares Element umfasst. Über die Referenzsysteme der beiden in Querrichtung einander gegenüberliegenden Messköpfe 10 referenzieren sich die Messköpfe 10 in Querrichtung unterhalb des Kraftfahrzeugs 6 zueinander. Somit können die Position und Ausrichtung der Messköpfe 10 zueinander bestimmt werden, und die Bildaufnahmen der Messtafeln 8 von beiden Messköpfen 10 können in ein gemeinsames Koordinatensystem gebracht werden.

Zusätzlich zu den Messköpfen 10 kann ein mobiles und/oder ein stationäres Bediengerät 40 vorgesehen sein, das es ermöglicht, Parameter und Kommandos einzugeben und an die Messköpfe 10 zu übertragen. Das Bediengerät 40 kann auch eine Anzeigevorrichtung 42 aufweisen, die ausgebildet ist, Messergebnisse, Bedienungsanweisungen, Fehlermeldungen und/oder weitere Informationen, die von den Messköpfen 10 an das Bediengerät 40 übertragen worden sind, anzuzeigen.

Das Bediengerät 40 kann insbesondere einen berührungsempfindlichen Bildschirm ("Touchscreen") aufweisen, der sowohl als Eingabevorrichtung als auch als Anzeigevorrichtung 42 verwendbar ist. Alternativ kann das Bediengerät 40 mit einer Anzeigevorrichtung (Bildschirm) 42 und einer davon getrennten Eingabevorrichtung, beispielsweise einer Tastatur, einer Maus und/oder einem Trackball, ausgebildet sein.

Das Bediengerät 40 kann darüber hinaus auch mit einer Bildaufnahmevorrichtung (Kamera) 44 ausgestattet sein. Eine Einsatzmöglichkeit einer solchen Bildaufnahmevorrichtung 44 im Rahmen der Erfindung wird weiter unten erläutert.

Das Bediengerät 40 kann beispielsweise ein Smartphone oder Tablet-PC sein und über eine drahtgebundene oder drahtlose Verbindung, z.B. eine WLAN- oder Bluetooth-Verbindung, mit den Messköpfen 10 und/oder einem nicht in den Figuren gezeigte Zentralrechner kommunizieren. Als Zentralrechner kann eine herkömmlicher Personalcomputer oder ein Einplatinencomputer, z.B. "Raspberry Pi" zum Einsatz kommen. Der Zentralrechner kann dazu ausgebildet sein, als Webserver betrieben zu werden, um es zu ermöglichen, anzuzeigende Informationen, insbesondere Messergebnisse, durch einen Webbrowser anzuzeigen. Auf diese Weise können handelsübliche Geräte, insbesondere Smartphones und Tablet-PCs als Bedien- und Anzeigegeräte 40 verwendet werden.

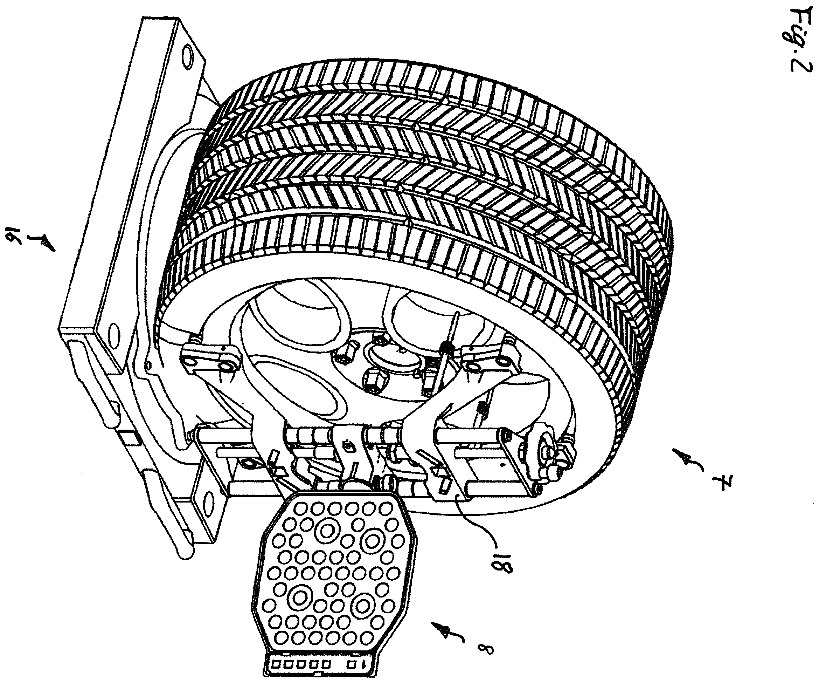

Obwohl der in der Figur 2 gezeigte Messplatz 1 mit einer Hebebühne 2 ausgestattet ist, können erfindungsgemäß ausgebildete Messtafeln 8 auch an Messplätzen 1 eingesetzt werden, die nicht mit einer Hebebühne 2 ausgestattet sind. Die Messköpfe 10 können insbesondere auch an Fahrschienen 4a, 4b, die auf dem Boden eines Messplatzes 1 installiert sind, angebracht werden oder neben dem Kraftfahrzeug 6 auf den Boden des Messplatzes 1 gestellt werden.

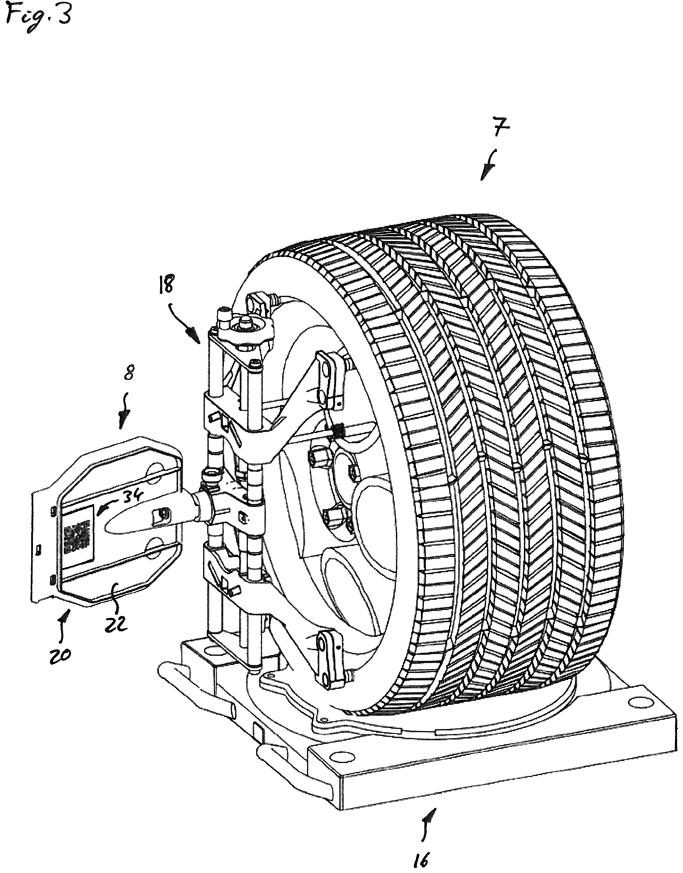

Die Figuren 2 und 3 zeigen vergrößerte Ansichten einer mit Hilfe eines Radadapters 18 an einem Rad 7 des Kraftfahrzeugs 6 angebrachten Messtafel 8 von vorne (Figur 2) und von hinten (Figur 3).

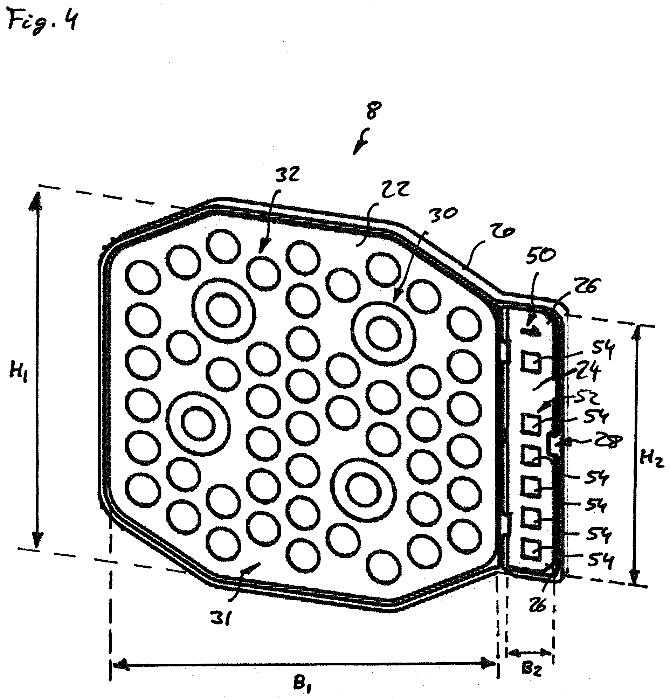

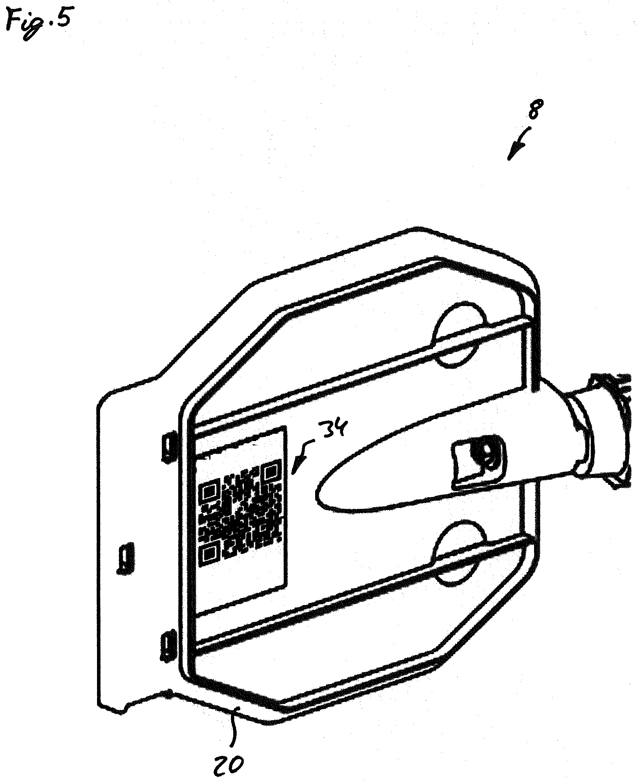

Die Figuren 4 und 5 zeigen vergrößerte Ansichten einer erfindungsgemäßen Messtafel 8 von vorne (Figur 4) und von hinten (Figur 5).

Die Messtafel 8 weist einen rahmenförmigen Messtafelelementträger 20 auf, der, z.B. mit Hilfe einer Steckverbindung, mit dem Radadapter 18 verbindbar ist, um die Messtafel 8 an einem Rad 7 des Kraftfahrzeugs 6 abzustützen.

Der Messtafelelementträger 20 trägt ein erstes Messtafelelement 22 und ein zweites Messtafelelement 24. In dem in den Figuren gezeigten Ausführungsbeispiel hat das erste Messtafelelement 22 eine größere Fläche als das zweite Messtafelelement 24.

Die beiden in den Figuren gezeigten Messtafelelemente 22, 24 sind plattenförmig ausgebildet, d.h. die Breite B₁, B₂ und Höhe H₁, H₂ der beiden Messtafelelemente 22, 24 sind erheblich größer als ihre Dicke, so dass die Messtafelelemente 22, 24 im Wesentlichen als 2-dimensionale Messtafelelemente 22, 24 betrachtet werden können.

Das erste Messtafelelement 22 weist beispielsweise eine Breite B₁ und Höhe H₁ von jeweils 10 cm bis 30 cm, insbesondere eine Breite B₁ und Höhe H₁ zwischen 15 cm und 25 cm auf; und das zweite Messtafelelement weist eine Höhe (Länge) H₂ von zwischen 10 cm und 30 cm und eine Breite B₂ zwischen 5 cm und 10 cm auf.

Die Dicke der Messtafelelemente 22, 24 ist üblicherweise geringer als 1 cm, insbesondere geringer als 0,6 cm.

Das in den Figuren gezeigte erste Messtafelelement 22 ist achteckig mit leicht abgerundeten Ecken ausgebildet. Das erste Messtafelelement 22 ist nicht als gleichseitiges Achteck in der Form eines Stoppschildes ausgebildet. Vielmehr sind die senkrechten Seiten des ersten Messtafelelements 22 länger als seine waagerechten Seiten. Das erste Messtafelelement 22 kann jedoch auch andere Geometrien haben, die in den Figuren nicht gezeigt sind.

Das zweite Messtafelelement 24 ist im Wesentlichen rechteckig mit zwei abgeschrägten Ecken 26 und einer in Längsrichtung zentralen Einbuchtung 28 ausgebildet.

Der Messtafelelementträger 20 ist so ausgebildet, dass das zweite Messtafelelement 24 aufgrund der abgeschrägten Ecken 26 und der Einbuchtung 28 nur in der gezeigten Ausrichtung in dem Messtafelelementträger 20 angeordnet werden kann. Insbesondere kann an dem Messtafelelementträger 20 ein Vorsprung ausgebildet sein, der in der zentralen Einbuchtung 28 angeordnet ist, wenn das zweite Messtafelelement 24 in der in den Figuren 2 und 4 gezeigten Ausrichtung in dem Messtafelelementträger 20 angeordnet ist.

Die beiden Messtafelelemente 22, 24 können unabhängig voneinander in dem Messtafelelementträger 20 angebracht und aus diesem entfernt werden. Dadurch können verschiedene erste und zweite Messtafelelemente 22, 24 beliebig in einem Messtafelelementträger 20 zu einer Messtafel 8 kombiniert werden.

Die Messtafelelemente 22, 24 können beispielsweise in den Messtafelelementträger 20 eingeschoben und/oder mit Hilfe von Rastverbindungen in dem Messtafelelementträger 20 arretiert werden.

Auf der in den Figuren 2 und 4 sichtbaren Vorderseite des ersten Messtafelelements 22, die im Messbetrieb einem der Messköpfe 10 zugewandt ist, ist ein 2-dimensionales Messmarkenmuster 31 ausgebildet, das eine Anzahl 2-dimensionaler optischer Merkmale, z.B. Messmarken, 30, 32, umfasst. Die optischen Merkmale 30, 32 können beispielsweise als helle Messmarken 30, 32, insbesondere als lichtreflektierende Retro-Reflexmarken, auf einem schwarzem Hintergrund ausgebildet sein.

In dem in den Figuren gezeigten Ausführungsbeispiel sind die optischen Merkmale 30, 32 kreis- bzw. scheibenförmig ausgebildet. Es sind aber auch andere, in den Figuren nicht gezeigte, optische Merkmale möglich. Einzige Bedingung für ein optisches Merkmal oder ein Messmarkenmuster ist, dass dessen Parameter, wie beispielsweise eine Position, nach einer optischen Erfassung algorithmisch bestimmt werden können.

Um die Fahrwerksvermessung mit der erforderlichen Genauigkeit durchführen zu können, müssen bestimmte Parameter der optischen Merkmale 30, 32, wie z.B. deren Positionen, mit hoher Genauigkeit bekannt sein. Da die Messmarkenmuster 31 nur mit gewissen Toleranzen hergestellt werden können, kann die erforderliche Genauigkeit bei der Herstellung der Messmarkenmuster 31 nicht garantiert werden. Die Messmarkenmuster 31 werden daher nach der Herstellung der ersten Messtafelelemente 22 mit hoher Genauigkeit vermessen, so dass die Parameter der Messmarkenmuster 31 mit der erforderlichen Genauigkeit zur Verfügung gestellt werden können.

Die auf diese Weise bestimmten Parameter der Messmarkenmuster 31 werden in einem optisch erfassbaren Informationsträger 34, insbesondere in einem Barcode oder QR-Code 34, kodiert. Der auf diese Weise erzeugte optisch erfassbare Informationsträger 34 wird auf der Rückseite des jeweiligen ersten Messtafelelements 22 angebracht oder ausgebildet, wie es in den Figuren 3 und 5 zu sehen ist.

Der optisch erfassbare Informationsträger 34 kann beispielsweise als Aufkleber auf die Rückseite des jeweiligen ersten Messtafelelements 22 aufgebracht oder direkt auf die Rückseite des jeweiligen ersten Messtafelelements 22 aufgedruckt werden.

Die Parameter der Messmarkenmuster 31 können insbesondere in Form der Abweichungen (Differenzen) der gemessenen Parameter von vorgegebenen Referenzparametern bestimmt und so platzsparend in den optisch erfassbaren Informationsträger 34 codiert werden.

Durch Einlesen des optisch erfassbaren Informationsträgers 34 können die Parameter der Messmarkenmuster 31 des ersten Messtafelelements 22 den Messköpfen 10 bekannt gemacht werden.

In einem Ausführungsbeispiel werden die Messtafeln 8 bzw. ersten Messtafelelemente 22 dazu vor dem Beginn der eigentlichen Messung so vor einem Messkopf 10 positioniert, dass der auf der Rückseite des jeweiligen ersten Messtafelelements 22 ausgebildete optisch erfassbare Informationsträger 34 von einer Bildaufnahmevorrichtung 12 des Messkopfes 10 optisch erfassbar ist. Der optisch erfassbare Informationsträger 34 kann dann von dem Messkopf 10 gelesen und ausgewertet werden.

Alternativ kann der optisch erfassbare Informationsträger 34 mit einer externen / mobilen Bildaufnahmevorrichtung 44, insbesondere mit der Kamera 44 eines mobilen Bediengerätes 40 (siehe Figur 1), erfasst und ausgewertet werden.

Da der optisch erfassbare Informationsträger 34 erfindungsgemäß auf der Rückseite des jeweiligen ersten Messtafelelements 22 ausgebildet ist, überlappt der optisch erfassbare Informationsträger 34 nicht mit dem auf der Vorderseite des jeweiligen ersten Messtafelelements 22 ausgebildete Messmarkenmuster 31 und nimmt keinen zusätzlichen Raum auf der Vorderseite des jeweiligen ersten Messtafelelements 22 in Anspruch.

Der optisch erfassbare Informationsträger 34 und das Messmarkenmuster 31 können daher unabhängig voneinander auf dem Messtafelelement 22 ausgebildet werden und der optisch erfassbare Informationsträger 34 kann in einer für die Kodierung der Parameter und guten Erkennbarkeit des optisch lesbaren Codes 34 vorteilhaften Größe ausgebildet werden, ohne dass hierfür die Abmessungen des ersten Messtafelelements 22 vergrößert werden müssen oder Platz für das auf der Vorderseite des jeweiligen ersten Messtafelelements 22 ausgebildete Messmarkenmuster 31 verloren geht.

Um zu vermeiden, dass der optisch erfassbare Informationsträger 34 vor jeder Fahrzeugvermessung erneut eingelesen werden muss, um die Parameter des Messmarkenmusters 31 des jeweiligen Messtafelelements 22 an den Messkopf 10 zu übertragen, können die in dem optisch erfassbaren Informationsträger 34 hinterlegten Parameter des Messmarkenmusters 31 einem auf einem zweiten Messtafelelement 24 ausgebildeten Identifikationsmuster 52 zugeordnet werden.

Dazu wird der optisch erfassbare Informationsträger 34, wie zuvor beschrieben, zunächst mit einer Bildaufnahmevorrichtung 12, 44, insbesondere der Bildaufnahmevorrichtung 12, 44 eines Messkopfes 10 oder eines mobilen Bediengerätes 40, optisch erfasst. Dann werden die in dem optisch erfassbaren Informationsträger 34 codierten Parameter dem Identifikationsmuster 52 eines dem ersten Messtafelelement 22 zugeordneten zweiten Messtafelelement 24, das gemeinsam mit dem ersten Messtafelelement 22 in demselben Messtafelelementträger 20 angeordnet ist, zugeordnet.

Diese Zuordnung kann dadurch erfolgen, dass auch das Identifikationsmuster 52 des dem ersten Messtafelelement 22 zugeordneten zweiten Messtafelelements 24 von einer Bildaufnahmevorrichtung 12, 44 erfasst wird. Diese Bildaufnahmevorrichtung 12, 44 kann die gleiche Bildaufnahmevorrichtung 12, 44 sein, die zuvor den optisch erfassbaren Informationsträger 34 erfasst hast. Zum optischen Erfassen des Identifikationsmusters 52 und zum Erfassen des optisch erfassbaren Informationsträgers 34 können aber auch zwei verschiedene Bildaufnahmevorrichtungen 12, 44 verwendet werden.

Alternativ können die in dem optisch erfassbaren Informationsträger 34 codierten Parameter dem Identifikationsmuster 52 eines zweiten Messtafelelement 24 zugeordnet werden, indem ein das zweite Messtafelelement 24 eindeutig identifizierender Code 50, insbesondere eine Zahl oder ein Buchstabe, der auf dem zweiten Messtafelelement 24 ausgebildet ist, manuell in das Bediengerät 40 eingegeben wird.

Bei jeder folgenden Vermessung des Kraftfahrzeugs 6 wird dann das auf dem zweiten Messtafelelement 24 ausgebildete Identifikationsmuster 52 von einer Bildaufnahmevorrichtung 12 des Messkopfes 10 optisch erfasst, so dass der Messkopf 10 anhand des erfassten Identifikationsmusters 52 auf die für das erfasste Identifikationsmuster 52 hinterlegten Parameter des dem erfassten Identifikationsmuster 52 zugeordneten ersten Messtafelelements 22 zugreifen kann.

Solange die gegenseitige Zuordnung der ersten und zweiten Messtafelelemente 22, 24 und damit die Zuordnung der Parameter der auf den ersten Messtafelelementen 22 ausgebildeten Messmarkenmuster 31 zu den zugehörigen Identifikationsmustern 52 erhalten bleibt, können die Messtafeln 8 in einer beliebigen Permutation an den Rädern 7 des Kraftfahrzeugs 6 angebracht werden. Anhand der von den Kameras 12 der Messköpfe 10 erfassten Identifikationsmuster können die Messköpfe 10 erkennen, welche Messtafel 8 an welchem Rad 7 des Kraftfahrzeugs 6 montiert ist, und so die für das Messmarkenmuster 31 der jeweiligen Messtafel 8 hinterlegten Parameter abrufen und in der folgenden Fahrwerksvermessung verwenden.

Es können für einen oder mehrere Messplätze 1 auch mehr als vier verschiedene Messtafeln 8 mit unterschiedlichen Identifikationsmustern 52 vorgesehen sein, wobei das Messmarkenmuster 31 jeder Messtafel 8 einem anderen Identifikationsmuster 52 zugeordnet wird. Auf diese Weise können an einem oder mehreren, beispielsweise nebeneinanderliegenden, Messplätzen 1 mehr als vier verschiedene Messtafelelemente 22 verwendet werden, ohne dass es dabei zu einer fehlerhaften Zuordnung der ersten Messtafelelemente 22 und dadurch zu falschen Messergebnissen kommt.

In dem in den Figuren gezeigten Ausführungsbeispiel umfasst das Identifikationsmuster 52 eine Anzahl von Identifikationsmuster-Marken 54, die äquidistant, d.h. in gleichen Abständen voneinander, entlang einer Reihe angeordnet sind. Die Identifikationsmuster-Marken 54 können, so wie die optischen Merkmale 30, 32, als lichtreflektierende Retro-Reflexmarken ausgebildet sein.

In dem in den Figuren gezeigten Ausführungsbeispiel sind die Identifikationsmuster-Marken 54 als Quadrate ausgebildet und in einer vertikalen Reihe an einer vom Fahrzeug 6 abgewandten Außenseite der Messtafel 8 angeordnet.

Die Identifikationsmuster-Marken 54 können auch andere geometrische Formen, z.B. Rechtecke, Quadrate oder Ellipsen, haben. Es ist vorteilhaft, wenn die Identifikationsmuster-Marken 54 eine andere geometrische Form und/oder Größe als die auf den ersten Messtafelelementen 22 ausgebildeten optischen Merkmale 30, 32 haben, so dass sie eindeutig von diesen unterscheidbar sind.

Die Identifikationsmuster-Marken 54 können auch in einer anderen geometrischen Anordnung als in einer vertikalen Reihe, beispielsweise in einer horizontalen Reihe oberhalb oder unterhalb des ersten Messtafelelements 22, oder in einer beliebigen anderen Anordnung angeordnet sein.

In dem in den Figuren gezeigten Ausführungsbeispiel sind die zweiten Messtafelelemente 24 dadurch eindeutig kodiert, dass wenigstens eine der Identifikationsmuster-Marken 54 in der äquidistanten Reihe der Identifikationsmuster-Marken 54 fehlt. Auf diese Weise können die zweiten Messtafelelemente 24 eindeutig und zuverlässig codiert, erkannt und identifiziert werden. Es sind jedoch auch andere Anordnungen/Kodierungen der Identifikationsmuster-Marken 54 möglich, welche eine eindeutige Identifikation und Unterscheidung der zweiten Messtafelelemente 24 ermöglichen.

Die vorgeschlagene Ausbildung der Messtafeln 8 mit zwei beliebig miteinander kombinierbaren ersten und zweiten Messtafelelementen 22, 24 ermöglicht eine flexible Handhabung der Messtafelelemente 22 im Werkstatteinsatz. Insbesondere müssen die ersten Messtafelelemente 22 bei ihrer Herstellung und Vermessung noch nicht einem der Räder 7 (vorne/hinten, rechts/links) eines zu vermessenden Kraftfahrzeugs 6 zu geordnet werden.

Erfindungsgemäße erste Messtafelelemente 22 werden nach ihrer Herstellung exakt vermessen, und die Parameter des auf dem jeweiligen ersten Messtafelelement 22 ausgebildeten Messmarkenmusters 31 werden in einem auf der Rückseite des ersten Messtafelelements 22 ausgebildeten optisch lesbaren Code hinterlegt.

Erst am Einsatzort/Messplatz 1 erfolgt dann die zuvor beschriebene Zuordnung der ersten Messtafelelemente 22 zu einem der zweiten Messtafelelemente 24. Die Paare einander zugeordneter erster und zweiter Messtafelelemente 22, 24 werden gemeinsam in einem Messtafelelementträger 20 angeordnet und bilden so eine zur Fahrzeugvermessung einsatzfähige Messtafel 8.

Aufgrund der flexiblen Zuordnung der ersten und zweiten Messtafelelemente 22, 24, die nicht schon bei der Herstellung, sondern erst am Messplatz 1 erfolgt, können Messtafelelemente 22, 24 einfach ausgetauscht werden, z.B. wenn sie beschädigt sind oder aufgrund geänderter Anforderungen durch Messtafelelemente 22, 24 mit anderen Messmarkenmustern 31 ersetzt werden sollen.

### Bezugszeichenliste

1 Messplatz
2 Hebebühne
3a hintere Säule
3b vordere Säule
4a rechte Fahrschiene
4a linke Fahrschiene
5a hinteren Querträger
5b vorderen Querträger
6 Kraftfahrzeug
7 Rad
8 Messtafel
10 Messkopf
12 Bildaufnahmevorrichtung
13 Bildverarbeitungseinheit
14 Haltevorrichtung
16 Drehplatte
18 Radadapter
20 Messtafelelementträger
22 erstes Messtafelelement
24 zweites Messtafelelement
26 abgeschrägte Ecke
28 zentrale Einbuchtung
30 optisches Merkmal
31 Messmarkenmuster
32 optisches Merkmal
34 optisch erfassbarer Informationsträger
40 Bediengerät
42 Anzeigevorrichtung
44 mobile Bildaufnahmevorrichtung
50 Bezeichner
52 Identifikationsmuster
54 Identifikationselemente

## Patentansprüche

1. Messtafel (8) zur optischen Vermessung oder Kalibrierung einer Fahrzeugkomponente, insbesondere eines Fahrwerks oder Fahrerassistenzsystems, wobei die Messtafel (8) aufweist:
wenigstens ein optisches Merkmal (30, 32); und
wenigstens einen optisch erfassbaren Informationsträger (34) von Messtafelinformationen, welche die Messtafel (8) selbst betreffen;
wobei das wenigstens eine optische Merkmal (30, 32) auf einer Vorderseite der Messtafel (8) ausgebildet oder angebracht ist;
**dadurch gekennzeichnet, dass**
der wenigstens eine optisch erfassbare Informationsträger (34) auf einer Rückseite der Messtafel (8) ausgebildet oder angebracht ist;
wobei auf der Vorderseite der Messtafel (8) zusätzlich wenigstens ein Identifikationsmuster (52) ausgebildet ist, welches es ermöglicht, die Messtafel (8) mit Hilfe einer auf die Vorderseite der Messtafel (8) gerichteten Bildaufnahmevorrichtung (12, 44) zu identifizieren; und
die Messtafel (8) ein erstes Messtafelelement (22) und ein separat von dem ersten Messtafelelement (22) ausgebildetes zweites Messtafelelement (24) umfasst, wobei das wenigstens eine optische Merkmal (30, 32) und der wenigstens eine optisch erfassbare Informationsträger (34) auf dem ersten Messtafelelement (22) ausgebildet sind und wobei das Identifikationsmuster (52) auf dem zweiten Messtafelelement (24) ausgebildet ist.

2. Messtafel (8) nach Anspruch 1, **dadurch gekennzeichnet, dass** die Messtafelinformationen wenigstens eines aus einer Gruppe sind, die umfasst: eine individuelle Kennung der Messtafel (8), geometrische Abmessungen der Messtafel (8), geometrische Abmessungen von auf der Messtafel (8) ausgebildeten optischen Merkmalen (30, 32), Parameter der Messtafel (8) und/oder der darauf ausgebildeten optischen Merkmale (30, 32), optische Eigenschaften der Messtafel (8) und/oder der darauf ausgebildeten optischen Merkmale (30, 32).

3. Messtafel (8) nach Anspruch einem der vorhergehen Ansprüche, **dadurch gekennzeichnet, dass** die Messtafelinformationen in den wenigstens einen optisch erfassbaren Informationsträger (34) codiert sind, wobei die Messtafelinformationen insbesondere in komprimierter Form in den wenigstens einen optisch erfassbaren Informationsträger (34) codiert sind.

4. Messtafel (8) nach Anspruch 3, **dadurch gekennzeichnet, dass** die Messtafelinformationen in einer maschinenlesbaren Form in den wenigstens einen optisch erfassbaren Informationsträger (34) codiert sind, wobei die maschinenlesbaren Form wenigstens ein Element aus der Gruppe enthält, die umfasst: alphanumerische Symbole oder dergleichen, einen eindimensionalen Code, insbesondere einen Strichcode, oder einen zweidimensionalen Code, insbesondere einen QR-Code, oder eine Kombination daraus.

5. Messtafel (8) nach einem der vorhergehenden Ansprüche, wobei das Identifikationsmuster (52) mehrere geometrische Identifikationselemente (54), insbesondere Kreise oder Polygone, umfasst, wobei das Identifikationsmuster (52) insbesondere mehrere gleichartige geometrische Identifikationselemente (54) umfasst.

6. Messtafel (8) nach Anspruch 5, wobei die Identifikationselemente (54) in einer messtafelspezifischen Anzahl auf der Messtafel (8) ausgebildet und/oder in einer messtafelspezifischen Anordnung auf der Messtafel (8) angeordnet sind, wobei die Identifikationselemente (54) insbesondere in einer vertikal oder horizontal oder diagonal oder schräg ausgerichteten Reihe auf der Messtafel (8) angeordnet sind.

7. Messtafel (8) nach Anspruch 6, wobei die Messtafel (8) einen Messtafelelementträger (20) aufweist, der dazu ausgebildet ist, das erste und das zweite Messtafelelement (22, 24) aufzunehmen; wobei das erste und das zweite Messtafelelement (22, 24) unabhängig voneinander an dem Messtafelelementträger (20) anbringbar und von diesem lösbar sind.

8. Radadapter (18) mit einer Messtafel (8) nach einem der Ansprüche 1 bis 7, der dazu ausgebildet, an einem Rad (7) eines Kraftfahrzeugs (6) angebracht zu werden.

9. Vorrichtung zur optischen Vermessung und/oder Kalibrierung einer Fahrzeugkomponente, insbesondere eines Fahrwerks oder Fahrerassistenzsystems, mit wenigstens einer Bildaufnahmevorrichtung (12),
wenigstens einer Bildverarbeitungseinheit (13) und
wenigstens einer Messtafel (8) nach einem der Ansprüche 1 bis 7,
wobei die wenigstens eine Messtafel (8), insbesondere mittels eines Radadapters (18), an einem Rad (7) eines Kraftfahrzeugs (6) anbringbar ist, und wobei die wenigstens eine Bildaufnahmevorrichtung (12) konfiguriert ist, ein Bild des optisch erfassbaren Informationsträgers der wenigstens einen Messtafel (8) aufzunehmen und das aufgenommene Bild an die wenigstens eine Bildverarbeitungseinheit (13) zu übertragen, und
wobei die wenigstens eine Bildverarbeitungseinheit (13) dazu ausgebildet ist, die Messtafelinformationen mittels Bildverarbeitung aus dem aufgenommenen Bild des optisch erfassbaren Informationsträgers (34) zu decodieren und die decodierten Messtafelinformationen bei einer folgenden Vermessung und/oder Kalibrierung zu verwenden.

10. Vorrichtung nach Anspruch 11, wobei die Vorrichtung eine mobile Bildaufnahmevorrichtung (44) umfasst, die zum Aufnehmen eines Bildes des optisch erfassbaren Informationsträgers (34) ausgebildet ist.

11. Verfahren zur optischen Vermessung oder Kalibrierung einer Fahrzeugkomponente, insbesondere eines Fahrwerks oder Fahrerassistenzsystems, unter Verwendung wenigstens einer Messtafel (8) nach einem der Ansprüche 1 bis 7, wobei das Verfahren die Schritte aufweist:
Anbringen der wenigstens einen Messtafel (8) an einem Rad (7) eines Kraftfahrzeugs (6) oder an ein für die Kalibrierung eines Fahrerassistenzsystems benötigten Messmittels;
Aufnehmen eines Bildes des wenigstens einen optisch erfassbaren Informationsträgers (34);
Erkennen und Decodieren der in dem Bild des wenigstens einen optisch erfassbaren Informationsträgers (34) enthaltenen Messtafelinformationen,
Aufnehmen wenigstens eines Bildes des wenigstens einen optischen Merkmals (30, 32); und
Verwenden der Messtafelinformationen bei der Vermessung oder Kalibrierung der Fahrzeugkomponente mit Hilfe des wenigstens einen aufgenommenen Bildes des wenigstens einen optischen Merkmals (30, 32).

12. Verfahren nach Anspruch 11, wobei das Verfahren umfasst, das wenigstens eine Bild des wenigstens einen optischen Merkmals (30, 32) mit einer stationären Bildaufnahmevorrichtung (12) einer Vorrichtung zur optischen Vermessung und/oder Kalibrierung einer Fahrzeugkomponente aufzunehmen.

13. Verfahren nach Anspruch 11 oder 12, wobei das Verfahren umfasst, das wenigstens eine Bild des wenigstens einen optisch erfassbaren Informationsträgers mit einer stationären Bildaufnahmevorrichtung (12) einer Vorrichtung zur optischen Vermessung und/oder Kalibrierung einer Fahrzeugkomponente oder mit einer mobilen Bildaufnahmevorrichtung (44), insbesondere mit einer Kamera (44) eines mobilen Bediengerätes (40), wie z.B. eines Smartphones (40) oder eines Tablet-PCs (40), aufzunehmen.

14. Verfahren nach einem der Ansprüche 11 bis 13, wobei das Verfahren zusätzlich umfasst,
die in dem optisch erfassbaren Informationsträger (34) enthaltenen Mess-tafelinformationen einem Identifikationsmuster (52) zuzuordnen;
ein Bild des Identifikationsmusters (52) aufzunehmen;
die wenigstens eine Messtafel (8) mit Hilfe des aufgenommenen Bildes des Identifikationsmusters (52) zu identifizieren; und
die in dem optisch erfassbaren Informationsträger (34) enthaltenen Mess-tafelinformationen der mit Hilfe des Identifikationsmusters (52) identifizierten Messtafel (8) zuzuordnen.

## Claims

1. A measurement panel (8) for the optical measurement or calibration of a vehicle component, in particular of a wheel system or driver assistance system, the measurement panel (8) comprising:
at least one optical feature (30, 32); and
at least one optically detectable information carrier (34) of measurement panel information relating to the measurement panel (8) itself;
wherein the at least one optical feature (30, 32) is formed on or attached to a front side of the measurement panel (8);
**characterized in that**
the at least one optically detectable information carrier (34) is formed on or attached to a rear side of the measurement panel (8);
at least one identification pattern (52) is additionally formed on the front side of the measurement panel (8), which identification pattern (52) enables the measurement panel (8) to be identified by means of an image recording device (12, 44) directed towards the front side of the measurement panel (8); and
the measurement panel (8) comprises a first measurement panel element (22) and a second measurement panel element (24) formed separately from the first measurement panel element (22), wherein the at least one optical feature (30, 32) and the at least one optically detectable information carrier (34) are formed on the first measurement panel element (22), and wherein the identification pattern (52) is formed on the second measurement panel element (24).

2. The measurement panel (8) according to claim 1,
**characterized in that** the measurement panel information is at least one of a group comprising: an individual identifier of the measurement panel (8), geometric dimensions of the measurement panel (8), geometric dimensions of optical features (30, 32) formed on the measurement panel (8), parameters of the measurement panel (8) and/or the optical features (30, 32) formed thereon, optical properties of the measurement panel (8) and/or the optical features (30, 32) formed thereon.

3. The measurement panel (8) according to any of the preceding claims,
**characterized in that** the measurement panel information is encoded in the at least one optically detectable information carrier (34), the measurement panel information being encoded in the at least one optically detectable information carrier (34) in particular in compressed form.

4. The measurement panel (8) according to claim 3,
**characterized in that** the measurement panel information is encoded in a machine-readable form in the at least one optically detectable information carrier (34), the machine-readable form including at least one element of the group comprising: alphanumeric symbols or the like, a one-dimensional code, in particular a bar code, or a two-dimensional code, in particular a QR code, or a combination thereof.

5. The measurement panel (8) according to to any of the preceding claims,
wherein the identification pattern (52) comprises a plurality of geometric identification elements (54), in particular circles or polygons, wherein the identification pattern (52) comprises in particular a plurality of like geometric identification elements (54).

6. The measurement panel (8) according to claim 5,
wherein the identification elements (54) are formed on the measurement panel (8) in a measurement panel-specific number and/or are arranged on the measurement panel (8) in a measurement panel-specific arrangement, wherein the identification elements (54) are arranged on the measurement panel (8) in particular in a vertically or horizontally or diagonally or obliquely aligned row.

7. The measurement panel (8) according to claim 6,
wherein the measurement panel (8) comprises a measurement panel element carrier (20) adapted to receive the first and second measurement panel elements (22, 24); wherein the first and second measurement panel elements (22, 24) are attachable to and detachable from the measurement panel element carrier (20) independently of each other.

8. A wheel adapter (18), comprising a measurement panel (8) according to any of claims 1 to 7, wherein the wheel adapter (18) is configured to be attached to a wheel of a motor vehicle (6).

9. A device for the optical measurement and/or calibration of a vehicle component, in particular a wheel system or driver assistance system, comprising:
at least one image recording device (12),
at least one image processing unit (13) and
at least one measurement panel (8) according to any of claims 1 to 9,
wherein the at least one measurement panel (8) can be attached to a wheel (7) of a motor vehicle (6), in particular by means of a wheel adapter (18), and wherein the at least one image recording device (12) is configured to capture an image of the optically detectable information carrier of the at least one measurement panel (8) and to transmit the captured image to the at least one image processing unit (13), and
wherein the at least one image processing unit (13) is adapted to decode the measurement panel information from the captured image of the optically detectable information carrier (34) by means of image processing and to use the decoded measurement panel information in a subsequent measurement and/or calibration.

10. The device according to claim 9,
wherein the device comprises a mobile image recording device (44) adapted to capture an image of the optically detectable information carrier (34).

11. A method for the optical measurement or calibration of a vehicle component, in particular a wheel system or driver assistance system, using at least one measurement panel (8) according to any of claims 1 to 7, the method comprising the steps of:
attaching the at least one measurement panel (8) to a wheel (7) of a motor vehicle (6) or to a measuring means required for the calibration of a driver assistance system;
capturing an image of the at least one optically detectable information carrier (34);
recognizing and decoding the measurement panel information contained in the image of the at least one optically detectable information carrier (34),
capturing at least one image of the at least one optical feature (30, 32); and
using the measurement panel information in the measurement or calibration of the vehicle component by means of the at least one captured image of the at least one optical feature (30, 32).

12. The method according to claim 11,
wherein the method comprises capturing the at least one image of the at least one optical feature (30, 32) by means of a stationary image recording device (12) of a device for the optical measurement and/or calibration of a vehicle component.

13. The method according to claim 11 or 12,
wherein the method comprises capturing the at least one image of the at least one optically detectable information carrier by means of a stationary image recording device (12) of a device for the optical measurement and/or calibration of a vehicle component or by means of a mobile image recording device (44), in particular a camera (44) of a mobile operating device (40), such as a smartphone (40) or a tablet PC (40).

14. The method according to any of claims 11 to 135,
wherein the method comprises furthermore:
assigning the measurement panel information contained in the optically detectable information carrier (34) to an identification pattern (52);
capturing an image of the identification pattern (52);
identifying the at least one measurement panel (8) by means of the captured image of the identification pattern (52); and
assigning the measurement panel information contained in the optically detectable information carrier (34) to the measurement panel (8) identified by means of the identification pattern (52).

## Revendications

1. Panneau de mesure (8) pour la mesure ou l'étalonnage optique d'un composant de véhicule, en particulier d'un châssis ou d'un système d'assistance à la conduite, le panneau de mesure (8) présentant :
au moins une caractéristique optique (30, 32) ; et
au moins un support d'informations détectable optiquement (34) d'informations du panneau de mesure qui concernent le panneau de mesure (8) lui-même ;
dans lequel la caractéristique optique (30, 32), une au moins, est réalisée ou fixée sur une face avant du panneau de mesure (8) ;
**caractérisé en ce que**
le support d'informations détectable optiquement (34), un au moins, est réalisé ou fixé sur une face arrière du panneau de mesure (8) ;
dans lequel est en outre réalisé sur la face avant du panneau de mesure (8) un motif d'identification (52), un au moins, qui permet d'identifier le panneau de mesure (8) à l'aide d'un dispositif de prise de vue (12, 44) orienté vers la face avant du panneau de mesure (8) ; et
**en ce que** le panneau de mesure (8) comprend un premier élément de panneau de mesure (22) et un deuxième élément de panneau de mesure (24) réalisé indépendamment du premier élément de panneau de mesure (22), la caractéristique optique (30, 32), une au moins, et le support d'informations détectable optiquement (34), un au moins, étant réalisés sur le premier élément de panneau de mesure (22) et le motif d'identification (52) étant réalisé sur le deuxième élément de panneau de mesure (24).

2. Le panneau de mesure (8) selon la revendication 1, **caractérisé en ce que** les informations du panneau de mesure sont au moins un élément d'un groupe comprenant : une identification individuelle du panneau de mesure (8), des dimensions géométriques du panneau de mesure (8), des dimensions géométriques de caractéristiques optiques (30, 32) formées sur le panneau de mesure (8), des paramètres du panneau de mesure (8) et/ou des caractéristiques optiques (30, 32) formées sur celui-ci, des propriétés optiques du panneau de mesure (8) et/ou des caractéristiques optiques (30, 32) formées sur celui-ci.

3. Le panneau de mesure (8) selon l'une quelconque des revendications précédentes, **caractérisé en ce que** les informations du panneau de mesure sont codées dans le support d'informations détectable optiquement (34), un au moins, les informations du panneau de mesure étant codées en particulier sous forme comprimée dans le support d'informations détectable optiquement (34), un au moins.

4. Le panneau de mesure (8) selon la revendication 3, **caractérisé en ce que** les informations du panneau de mesure sont codées sous une forme lisible par une machine dans le support d'informations détectable optiquement (34), un au moins, la forme lisible par une machine contenant au moins un élément du groupe comprenant : des symboles alphanumériques ou analogues, un code unidimensionnel, en particulier un code à barres, ou un code bidimensionnel, en particulier un code QR, ou une combinaison de ceux-ci.

5. Le panneau de mesure (8) selon l'une quelconque des revendications précédentes, dans lequel le motif d'identification (52) comprend plusieurs éléments géométriques d'identification (54), en particulier des cercles ou des polygones, le motif d'identification (52) comprenant en particulier plusieurs éléments géométriques d'identification (54) de même nature.

6. Le panneau de mesure (8) selon la revendication 5, dans lequel les éléments d'identification (54) sont réalisés sur le panneau de mesure (8) en un nombre spécifique au panneau de mesure et/ou sont disposés sur le panneau de mesure (8) selon une disposition spécifique au panneau de mesure, les éléments d'identification (54) étant en particulier disposés sur le panneau de mesure (8) selon une rangée orientée verticalement, horizontalement, en diagonale ou en oblique.

7. Le panneau de mesure (8) selon la revendication 6, dans lequel le panneau de mesure (8) comprend un support d'élément de panneau de mesure (20) adapté pour recevoir les premier et deuxième éléments du panneau de mesure (22, 24) ; dans lequel les premier et deuxième éléments du panneau de mesure (22, 24) peuvent être fixés et détachés indépendamment l'un de l'autre du support d'élément de panneau de mesure (20).

8. Adaptateur de roue (18) doté d'un panneau de mesure (8) selon l'une quelconque des revendications 1 à 7, réalisé de manière à être fixé sur une roue (7) d'un véhicule (6).

9. Dispositif de mesure et/ou d'étalonnage optique d'un composant de véhicule, en particulier d'un châssis ou d'un système d'assistance à la conduite, avec au moins un dispositif de prise de vue (12),
au moins une unité de traitement d'images (13) et
au moins un panneau de mesure (8) selon l'une quelconque des revendications 1 à 7,
dans lequel le panneau de mesure (8), un au moins, peut être fixé à une roue (7) d'un véhicule (6) au moyen d'un adaptateur de roue (18), et dans lequel le dispositif de prise de vue (12), un au moins, est configuré de manière à prendre une image du support d'informations détectable optiquement du panneau de mesure (8), un au moins, et à transmettre l'image prise à l'unité de traitement d'images (13), une au moins, et
dans lequel l'unité de traitement d'images (13), une au moins, est réalisée de manière à décoder les informations du panneau de mesure au moyen d'un traitement d'image à partir de l'image prise du support d'informations détectable optiquement (34) et à utiliser les informations du panneau de mesure décodées lors d'une mesure et/ou d'un étalonnage suivants.

10. Le dispositif selon la revendication 11, ledit dispositif comprenant un dispositif de prise de vue mobile (44) réalisé de manière à prendre une image du support d'informations détectable optiquement (34).

11. Procédé de mesure ou d'étalonnage optique d'un composant de véhicule, en particulier d'un châssis ou d'un système d'assistance à la conduite, utilisant au moins un panneau de mesure (8) selon l'une quelconque des revendications 1 à 7, le procédé comprenant les étapes suivantes :
fixation du panneau de mesure (8), un au moins, à une roue (7) d'un véhicule (6) ou à un moyen de mesure nécessaire à l'étalonnage d'un système d'assistance à la conduite ;
prise d'une image du support d'informations détectable optiquement (34), un au moins ;
reconnaissance et décodage des informations du panneau de mesure contenues dans l'image du support d'informations détectable optiquement (34), un au moins ;
prise d'au moins une image de la caractéristique optique (30, 32), une au moins ; et
utilisation des informations du panneau de mesure lors de la mesure ou de l'étalonnage du composant de véhicule à l'aide de l'image prise, une au moins, de la caractéristique optique (30, 32), une au moins.

12. Le procédé selon la revendication 11, ledit procédé impliquant de prendre l'image, une au moins, de la caractéristique optique (30, 32), une au moins, avec un dispositif de prise de vue stationnaire (12) d'un dispositif de mesure et/ou d'étalonnage optique d'un composant de véhicule.

13. Le procédé selon la revendication 11 ou 12, ledit procédé impliquant de prendre l'image, une au moins, du support d'informations détectable optiquement, un au moins, avec un dispositif de prise de vue stationnaire (12) d'un dispositif de mesure et/ou d'étalonnage optique d'un composant de véhicule ou avec un dispositif de prise de vue mobile (44), en particulier avec une caméra (44) d'un appareil de commande mobile (40), comme par exemple un smartphone (40) ou une tablette électronique (40).

14. Le procédé selon l'une quelconque des revendications 11 à 13, ledit procédé impliquant en outre
d'affecter les informations du panneau de mesure contenues dans le support d'informations détectable optiquement (34) à un motif d'identification (52) ;
de prendre une image du motif d'identification (52) ;
d'identifier le panneau de mesure (8), un au moins, à l'aide de l'image prise du motif d'identification (52) ; et
d'affecter les informations du panneau de mesure contenues dans le support d'informations détectable optiquement (34) au panneau de mesure (8) identifié à l'aide du motif d'identification (52).
